(19)

Europäisches
Patentamt
European
Patent Office
Office européen
des brevets

(11) **EP 2 506 193 A1**

(12) **EUROPEAN PATENT APPLICATION**
published in accordance with Art. 153(4) EPC

(43) Date of publication:
**03.10.2012 Bulletin 2012/40**

(51) Int Cl.:
***G06Q 10/00*** (2012.01)

(21) Application number: **10833103.4**

(22) Date of filing: **16.11.2010**

(86) International application number:
**PCT/JP2010/070381**

(87) International publication number:
**WO 2011/065256 (03.06.2011 Gazette 2011/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.11.2009 JP 2009266674**

(71) Applicant: **NTT DOCOMO, INC.**
**Chiyoda-ku**
**Tokyo**
**100-6150 (JP)**

(72) Inventors:
• **KOBAYASHI Motonari**
**Tokyo 100-6150 (JP)**

• **IKEDA Daizo**
**Tokyo 100-6150 (JP)**
• **AOYAGI Sadanori**
**Tokyo 100-6150 (JP)**
• **ODAWARA Tooru**
**Tokyo 100-6150 (JP)**
• **OKAJIMA Ichiro**
**Tokyo 100-6150 (JP)**
• **NAGATA Tomohiro**
**Tokyo 100-6150 (JP)**

(74) Representative: **Viering, Jentschura & Partner**
**Grillparzerstrasse 14**
**81675 München (DE)**

(54) **DEMAND PREDICTION DEVICE AND DEMAND PREDICTION METHOD**

(57)   The present invention provides a demand prediction device and a demand prediction method capable of performing demand prediction with higher accuracy. A demand prediction server 10 includes a data acquisition unit 1 for acquiring estimated population information that indicates population estimated in a predetermined area, a spatial weighing unit 3 for acquiring relative distance information that indicates a distance between a position of a prediction reference area included in the predetermined area and a position of a prediction target area for which the number of demands is to be predicted with the prediction reference area as a reference, and a regression analysis unit 4 and a demand prediction unit 5 for, by performing regression analysis using the estimated population information acquired by the data acquisition unit 1 and a residual based on the relative distance information acquired by the spatial weighing unit 3, predicting the number of demands in the prediction target area.

*Fig.4*

EP 2 506 193 A1

**Description**

**Technical Field**

The present invention relates to a demand prediction device that predicts the number of demands of users who want to use a service, and a demand prediction method that the demand prediction device executes.

**Background Art**

Conventionally, proposed have been various types of systems that predict the number of demands for a dispatch service of a vehicle such as a taxi. In Patent Literature 1, for example, disclosed is a vehicle demand prediction system that performs demand prediction of vehicle dispatch using a relationship between demand result data and fluctuation factor result data that are determined for each of predetermined cases.

**Citation List**

**Patent Literature**

[Patent Literature 1] Japanese Patent Application Laid-Open Publication No. 2001-84240

**Summary of Invention**

**Technical Problem**

Data that the vehicle demand prediction system described in Patent Literature 1 uses when performing demand prediction is demand result data that indicates time when a vehicle state transits from one to another among four states of a vehicle being available for hire, carrying a passenger, on way to pick up a booked fare, and taking a rest, and is not geographical data that indicates a place where the number of people who need a vehicle such as a taxi is estimated to be large, and thus performing demand prediction on the basis of this geographical data is not considered at all. Accordingly, there is a problem that the prediction accuracy in the demand prediction may deteriorate.
In view of this, the present invention is made to solve the above-described problem, and aims to provide a demand prediction device and a demand prediction method capable of performing demand prediction with higher accuracy.

**Solution to Problem**

A demand prediction device according to the present invention is a demand prediction device that predicts the number of demands of users who want to use a service, and includes estimation acquisition means for acquiring estimated population information that indicates population estimated in a predetermined area; distance acquisition means for acquiring relative distance information that indicates a distance between a position of a prediction reference area included in the predetermined area and a position of a prediction target area for which the number of demands is to be predicted with the prediction reference area as a reference; and prediction means for, by performing regression analysis using the estimated population information acquired by the estimation acquisition means and a residual based on the relative distance information acquired by the distance acquisition means, predicting the number of demands in the prediction target area, wherein the prediction means predicts the number of demands by assigning weights such that the residual becomes smaller as the distance that the relative distance information indicates becomes shorter.
The demand prediction device according to the present invention initially acquires the estimated population information indicating the population estimated in the predetermined area, and acquires the relative distance information indicating the distance between the position of the prediction reference area included in the predetermined area and the position of the prediction target area for which the number of demands is to be predicted with the prediction reference area as the reference. Then, the demand prediction device, by performing regression analysis using the estimated population information and the residual based on the relative distance information, predicts the number of demands in the prediction target area. It should be noted that the demand prediction device assigns weights such that the residual becomes smaller as the distance that the relative distance information indicates becomes shorter. Herein, there is a correlation that as the population indicated by the estimated population information acquired increases, the number of people estimated to need supply of the service increases. The demand prediction device according to the present invention predicts the number of demands by performing regression analysis not only considering the above-described estimated population information that has the correlation with the number of people estimated to need the supply of the service, but also considering as geographical data a condition in which as the distance between the position of the prediction reference area and the position of the prediction target area becomes shorter, the residual being a difference in predicting the number of demands becomes smaller, and thus it is possible to perform demand prediction with higher accuracy.

In addition, a demand prediction device according to the present invention is a demand prediction device that predicts the number of demands of users who want to use a service, and includes estimation acquisition means for acquiring estimated population information that indicates population estimated in a predetermined area; event acquisition means for acquiring scale information and event position information on an event in the predetermined area; distance acquisition means for acquiring reference distance information that indicates a distance between a position of the event that the event position information acquired by the event acquisition means indicates and a position of a prediction reference area for which the number of demands is to be predicted; and prediction means for, by performing regression analysis using the estimated population information acquired by the estimation acquisition means and an explanatory variable based on the scale information of the event acquired by the event acquisition means and the reference distance information acquired by the distance acquisition means, predicting the number of demands in the prediction reference area, wherein the prediction means predicts the number of demands by assigning weights such that the explanatory variable becomes larger as the distance that the reference distance information indicates becomes shorter.

The demand prediction device according to the present invention initially acquires the estimated population information, the scale information, and the event position information, and acquires the reference distance information indicating the distance between the position of the event that the event position information indicates and the position of the prediction reference area. Then, the demand prediction device, by performing regression analysis using the estimated population information and the explanatory variable based on the scale information and the reference distance information, predicts the number of demands in the prediction reference area. It should be noted that the demand prediction device assigns weights such that the explanatory variable based on the scale information and the reference distance information becomes larger as the distance that the reference distance information indicates becomes shorter. Herein, there is a correlation that as the population indicated by the estimated population information acquired increases, the number of people estimated to need supply of the service increases. The demand prediction device according to the present invention predicts the number of demands by performing regression analysis not only considering the above-described estimated population information that has the correlation with the number of people estimated to need the supply of the service, but also considering as geographical data a condition in which as the distance between the position of the event and the position of the prediction reference area becomes shorter, the above-described explanatory variable becomes larger, and thus it is possible to perform demand prediction with higher accuracy.

In addition, it is preferable that the distance acquisition means acquires relative distance information that indicates a distance between a position of the prediction reference area included in the predetermined area and a position of a prediction target area that is located on the same road as that on the prediction reference area and for which the number of demands is to be predicted, and the prediction means, by performing regression analysis using a residual that is based on the relative distance information acquired by the distance acquisition means and becomes smaller as the distance that the relative distance information indicates becomes shorter, predicts the number of demands in the prediction target area. Because the number of demands is predicted by performing regression analysis considering as geographical data a condition in which as the distance between the position of the prediction reference area and the position of the prediction target area becomes shorter, the residual being a difference in predicting the number of demands becomes smaller, it is possible to perform demand prediction with higher accuracy.

In addition, it is preferable that the estimation acquisition means acquires count information on the number of processes in which a position registering process is performed by a mobile terminal within a predetermined time period in the predetermined area as the estimated population information. Herein, there is a correlation that as the number of processes in which the position registering process indicated by the count information acquired by the estimation acquisition means is performed increases, the number of users of mobile phones is estimated to be larger, and thus the number of people who need the supply of the service increases. Accordingly, with this structure, it becomes possible to estimate dynamic changes in population, making it possible to perform demand prediction with higher accuracy.

In addition, it is preferable that the estimation acquisition means acquires weather information on weather in the predetermined area and also acquires the estimated population information based on the weather information. With this structure, the number of demands is predicted with the weather information on weather in the predetermined area considered, making it possible to perform demand prediction with higher accuracy.

In addition, it is preferable that the distance acquisition means acquires region attribute information on an attribute of a region in which the prediction reference area is included, and the prediction means calculates a coefficient of an explanatory variable based on the attribute that the region attribute information acquired by the distance acquisition means indicates to predict the number of demands. With this structure, it becomes possible to predict the number of demands on the basis of the attribute of the region in which the prediction reference area is included.

A demand prediction method according to the present invention is a demand prediction method that a demand prediction device predicting the number of demands of users who want to use a service executes, and includes an estimation acquisition step of, by the demand prediction device, acquiring estimated population information that indicates population estimated in a predetermined area; a distance acquisition step of, by the demand prediction device, acquiring relative distance information that indicates a distance between a position of a prediction reference area included in the predetermined area and a position of a prediction target area for which the number of demands is to be predicted with the prediction reference area as a reference; and a prediction step of, by the demand prediction device, by performing regression analysis using the estimated population information acquired at the estimation acquisition step and a residual based on the relative distance information acquired at the distance acquisition step by the demand prediction device, predicting the number of demands in the prediction target area, wherein at the prediction step, the demand prediction device predicts the number of demands by assigning weights such that the residual becomes smaller as the distance that the relative distance information indicates becomes shorter.

In the demand prediction method according to the present invention, initially, the demand prediction device acquires the estimated population information indicating population estimated in the predetermined area, and acquires the relative distance information indicating the distance between the position of the prediction reference area included in the predetermined area and the position of the prediction target area for which the number of demands is to be predicted with the prediction reference area as a reference. Then, by performing regression analysis using the estimated population information and the residual based on the relative distance information, the demand prediction device predicts the number of demands in the prediction target area. It should be noted that assign weights such that the residual becomes smaller as the distance that the relative distance information indicates becomes shorter. Herein, there is a correlation that as the population indicated by the estimated population information acquired increases, the number of people estimated to need supply of the service increases. The demand prediction device according to the present invention predicts the number of demands by performing regression analysis not only considering the above-described estimated population information that has the correlation with the number of people estimated to need the supply of the service, but also considering as geographical data a condition in which as the distance between the position of the prediction reference area and the position of the prediction target area becomes shorter, the residual being a difference in predicting the number of demands becomes smaller, and thus it is possible to perform demand prediction with higher accuracy.

In addition, a demand prediction method according to the present invention is a demand prediction method that a demand prediction device predicting the number of demands of users who want to use a service executes, and includes an estimation acquisition step of, by the demand prediction device, acquiring estimated population information that indicates population estimated in a predetermined area; an event acquisition step of, by the demand prediction device, acquiring scale information and event position information on an event in the predetermined area; a distance acquisition step of, by the demand prediction device, acquiring reference distance information that indicates a distance between a position of the event that the event position information acquired at the event acquisition step indicates and a position of a prediction target area for which the number of demands is to be predicted; and a prediction step of, by the demand prediction device, by performing regression analysis using the estimated population information acquired at the estimation acquisition step and an explanatory variable based on the scale information of the event acquired at the event acquisition step and the reference distance information acquired at the distance acquisition step by the demand prediction device, predicting the number of demands in the prediction target area, wherein at the prediction step, the demand prediction device predicts the number of demands by assigning weights such that the explanatory variable becomes larger as the distance that the reference distance information indicates becomes shorter.

The demand prediction device according to the present invention initially acquires the estimated population information, the scale information, and the event position information, and acquires the reference distance information that indicates the distance between the position of the event that the event position information indicates and the position of the prediction reference area. Then, the demand prediction device, by performing regression analysis using the estimated population information and the explanatory variable based on the scale information and the reference distance information, predicts the number of demands in the prediction reference area. It should be noted that the demand prediction device assigns weights such that the explanatory variable based on the scale information and the reference distance information becomes larger as the distance that the reference distance information indicates becomes shorter. Herein, there is a correlation that as the population indicated by the estimated population information acquired increases, the number of people estimated to need supply of the service increases. The demand prediction device according to the present invention predicts the number of demands by performing regression analysis not only considering the above-described estimated population information that has the correlation with the number of people estimated to need the supply of the service, but also considering as geographical data a condition in which as the distance between the position of the event and the position of the prediction reference area becomes shorter, the above-described explanatory variable becomes larger, and thus it is possible to perform demand prediction with higher accuracy.

Advantageous Effects of Invention

According to the present invention, it is possible to provide a demand prediction device and a demand prediction method capable of performing demand prediction with higher accuracy.

**Brief Description of Drawings**

[Fig. 1] Fig. 1 is a function explanatory diagram for explaining a function of a demand prediction server.

[Fig. 2] Fig. 2 is an image diagram for explaining superimposition of each data in demand prediction.

[Fig. 3] Fig. 3 is a function explanatory diagram for explaining the function of the demand prediction server.

[Fig. 4] Fig. 4 is a function block diagram for explaining an outline of a functional module structure of the demand prediction server.

[Fig. 5] Fig. 5 is a physical structure diagram for explaining an outline of a physical structure of the demand prediction server.

[Fig. 6] Fig. 6 is a DB structure diagram illustrating one example of a storage format for an area ID and estimated population information.

[Fig. 7] Fig. 7 is a DB structure diagram illustrating one example of a storage format for an area ID and a rainfall amount.

[Fig. 8] Fig. 8 is a DB structure diagram illustrating one example of a storage format for an area ID and a temperature.

[Fig. 9] Fig. 9 is a DB structure diagram illustrating one example of a storage format for event information.

[Fig. 10] Fig. 10 is a DB structure diagram illustrating one example of a storage format for a road ID and a road line.

[Fig. 11] Fig. 11 is a DB structure diagram illustrating one example of a storage format for a facility ID and influence.

[Fig. 12] Fig. 12 is a DB structure diagram illustrating one example of a storage format for an actual riding location point and a riding date and time.

[Fig. 13] Fig. 13 is a DB structure diagram illustrating one example of a storage format for a day of the week corresponding to the riding date and time, and whether the day is a weekday or a holiday.

[Fig. 14] Fig. 14 is a DB structure diagram illustrating one example of a storage format for an area ID and a center point.

[Fig. 15] Fig. 15 is a DB structure diagram illustrating one example of a storage format for an area ID and a regression formula.

[Fig. 16] Fig. 16 is a DB structure diagram illustrating one example of a storage format for an area ID and the predicted number of rides.

[Fig. 17] Fig. 17 is a DB structure diagram illustrating one example of a storage format for an area ID and a regression formula.

[Fig. 18] Fig. 18 is a DB structure diagram illustrating one example of a storage format for an area ID and the predicted number rides.

[Fig. 19] Fig. 19 is a flowchart illustrating a flow of an area extraction process for extracting a predetermined area overlapping a road.

[Fig. 20] Fig. 20 is a flowchart illustrating a flow of a regression formula calculation process for calculating a regression formula.

[Fig. 21] Fig. 21 is a flowchart illustrating a flow of a data generation process for generating prediction result data.

**Description of Embodiments**

Preferred embodiments of the present invention will be described hereinafter with reference to the drawings. It should be noted that like reference signs are given to like elements in the description of the drawings, and redundant explanations are omitted.

(1) Function of Demand Prediction Server

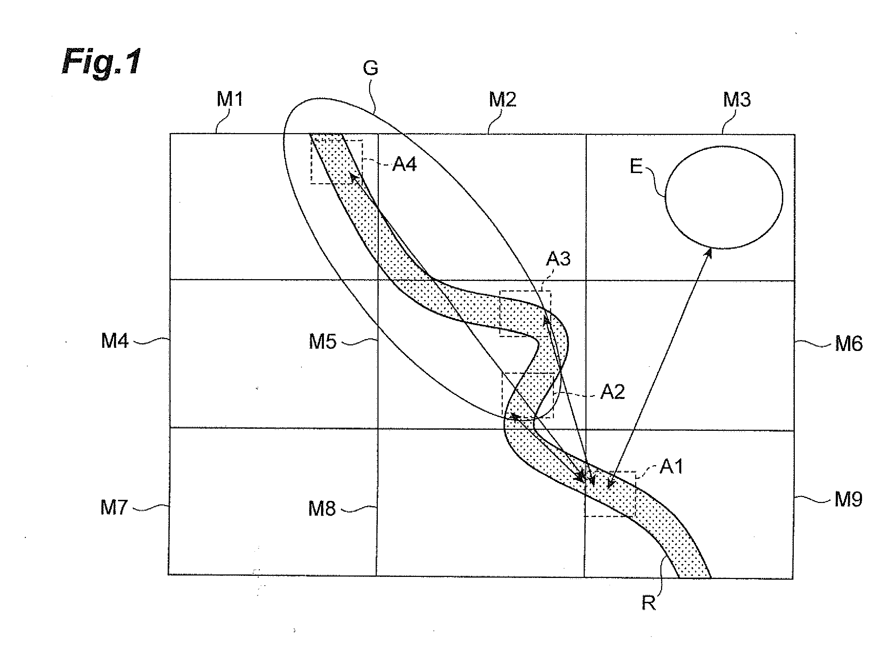

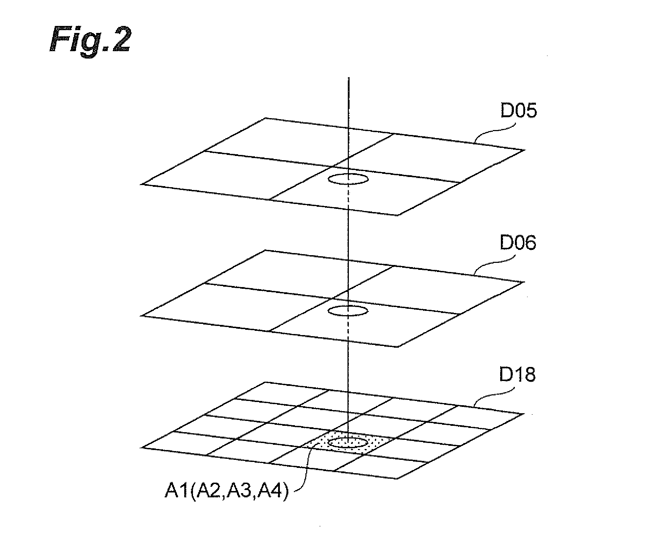

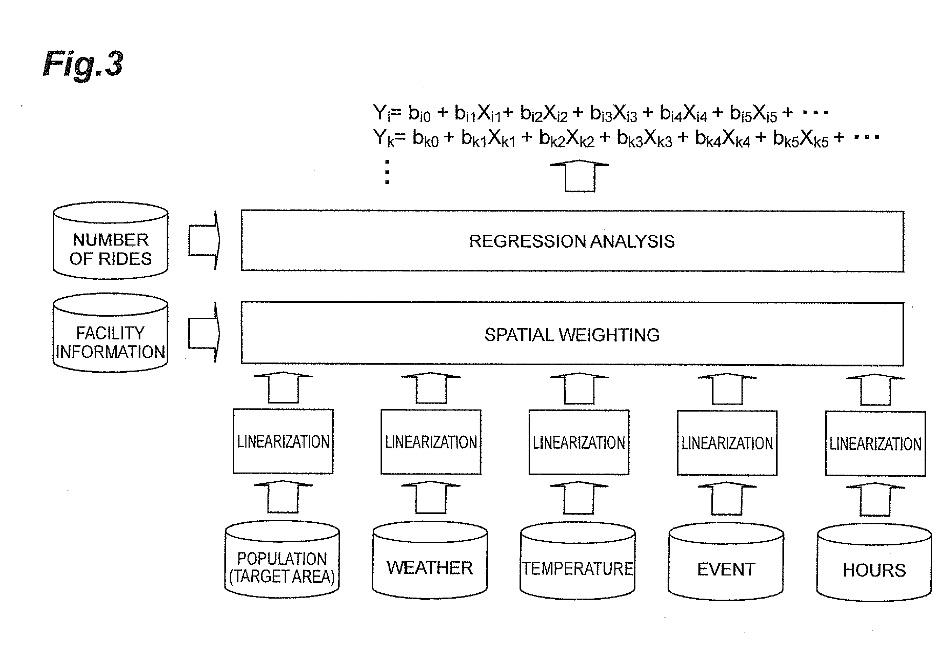

To begin with, a demand prediction server as a demand prediction device according to the present embodiment will be described with reference to Fig. 1 to Fig. 3. Fig. 1 and Fig. 3 are function explanatory diagrams for explaining a function of the demand prediction server, and Fig. 2 is an image diagram for explaining superimposition of each data in demand prediction. The demand prediction server is a device that is installed in a taxi company, for example, and predicts as the number of demands the number of paging calls or the number of rides in each of predetermined areas as demands from users who want to use a dispatch service of a taxi. By predicting the number of paging calls or the number of rides in this manner, it becomes possible to take measures such as stationing a necessary number of operators for handling calls, making it possible to smoothly provide dispatch of a taxi.

The demand prediction server, initially, as depicted in Fig. 1, from predetermined areas M1 to M9 sectioned in a mesh pattern, selects one area M3 where supply of a dispatch service of a taxi is required the most due to holding of an event E, and acquires reference distance information indicating a distance between a position of the event E in the area M3 and a position of prediction reference area A 1 that serves as a reference in predicting demands.

Then, the demand prediction server, by performing regression analysis using estimated population information in the area M9 including the prediction reference area A1 and an explanatory variable based on scale information of the event E and the reference distance information, predicts the number of demands in the prediction reference area A1. It should be noted that weights are assigned such that as the distance that the reference distance information indicates becomes shorter, the explanatory variable (i.e., impact of the event E on taxi demands) becomes larger.

Herein, there is a correlation that as the population indicated by the estimated population information increases, the number of people estimated to need the supply of the dispatch service of a taxi increases. The demand prediction server predicts the number of demands by performing regression analysis not only considering the estimated population information that has the correlation with the number of people estimated to need the supply of the service, but also considering as geographical data a condition in which as the above-described reference distance information becomes shorter, the explanatory variable for the event impact becomes larger, and thus it is possible to perform demand prediction with higher accuracy.

In addition, the demand prediction server obtains a regression formula for predicting demands in the prediction reference area A1, and at the same time, obtains a regression formula for predicting demands in each of prediction target areas A2 to A4 in an area group G that is located on the same road R in a same manner as in the prediction reference area A1. Then, after the demands in the prediction reference area A1 are predicted, demands in the prediction target area A2 are predicted. Furthermore, after the demands in the prediction target area A2 are predicted, demands in the prediction target area A3 are predicted and, after the demands in the prediction target area A3 are predicted, demands in the prediction target area A4 are predicted. Conventional regression analysis is performed so that the sum square of residuals of the respective regression formulae becomes minimum, but herein, it is taken into account that regression formulae for geometrically closer areas are considered more similar to each other, when the sum square of the residuals is calculated, weights are assigned to emphasize such geometrically close areas. For example, it is taken into account that regression formulae are considered the most similar to each other between the prediction target area A2 that is the closest to the prediction reference area A1 among the prediction target areas A2 to A4 and the prediction reference area A1, and also regression formulae are considered the least similar to each other between the prediction target area A4 that is the most distant from the prediction reference area A1 and the prediction reference area A1.

Furthermore, the demand prediction server, as depicted in Fig. 2, for example, when performing demand prediction for the prediction reference area A1 and performing regression analysis for calculating prediction result data D18, initially, converts estimated population information D05 described later for an area overlapping the prediction reference area A1, weather information D06 on weather or temperature described later for the area overlapping the prediction reference area A1, event information on the event E or opening hours thereof for the area overlapping the prediction reference area A1, and the like into numbers, linearizes them, and superimposes the results. By superposing each data in this manner, it becomes possible to predict the number of demands in consideration of each element such as population, weather, and the event E.

The estimated population information is, for example, hourly information indicated by a mesh population density diagram, and the weather information is, for example, hourly information in each of rectangular areas with sides of 10 to 500 meters or daily information in all of the areas M1 to M9. In addition, the event information is, for example, daily information in each of more finely divided areas than the above-mentioned rectangular areas.

For example, population indicated by the estimated population information is subjected to a linearization process without numerical transformation to become linearized population distribution data. In addition, a rainfall amount included in the weather information is subjected to a linearization process of setting it to "0" if it is less than one millimeter and setting it to "1" if it is equal to or more than one millimeter to become linearized weather data. Alternatively, the rainfall amount included in the weather information may be subjected to a linearization process of setting it to "0" if it is less than one millimeter, setting it to "1" if it is less than five millimeters, setting it to "2" if it is equal to or less than 10 millimeters, and setting it to "3" if it is equal to or more than 20 millimeters to become linearized weather data.

In addition, a temperature (e.g., maximum air temperature) included in the weather information may be subjected to a linearization process of setting it to a minimum of "1" as a discomfort index if it is 10 to 20°C, setting it to "2" as a discomfort index if it is lower than 10°C or equal to or higher than 30°C, and setting it to a maximum of "3" as a discomfort index if it is equal to or higher than 35°C to become linearized weather data.

In addition, a category of an event included in the event information is subjected to a linearization process of setting it to a minimum of "1" as an event scale if it is a "sport", setting it to "2" as an event scale if it is an "exhibition", and setting it to a maximum of "3" as an event scale if it is a "festival or fireworks" to become linearized event data.

In addition, opening hours of the event included in the event information is subjected to a linearization process of setting it to a minimum of "1" as a usage level if it is "1:00 on a weekday", setting it to "2" as a usage level if it is "15:

00 on a weekday", and setting it to a maximum of "3" as a usage level if it is "17:00 on a holiday" to become linearized event data. It should be noted that methods of the above-described linearization processes are examples and it is preferable to prepare a scatter diagram, for example, and then perform a linearization process watching tendencies thereof.

Then, by the demand prediction server, as depicted in Fig. 3, a spatial weighting (geographical weighting) process is performed. In this process, as a distance between the prediction reference area A1 and a prediction target area on the same road R is shorter, spatial regression analysis is performed with more weights assigned to emphasize a residual in a regression formula for demand prediction. Accordingly, as the distance between the areas becomes shorter, coefficients of explanatory variables in regression formulae used for predicting the number of demands become closer values to each other (i.e., the regression formulae become similar).

Herein, when the prediction reference area A1 or the prediction target areas are included in a region where a facility having influence on taxi demands exists such as an area around a station and a bus stop, around a hospital, or around an area with no public transportation service, based on facility information indicating an attribute of such a region, a coefficient of an explanatory variable in a regression formula used for predicting the number of demands in the prediction reference area A1 or the prediction target areas is calculated. The demand prediction server performs regression analysis using the actual number of rides, obtains a regression formula having the number of demands $Y_i$ or $Y_k$ predicted for a determined applicable range as a target variable, and obtains the number of demands using this regression formula. The number of demands is hourly information in each of the more finely divided areas than the above-mentioned rectangular areas, for example.

(2) Structure of Demand Prediction Server

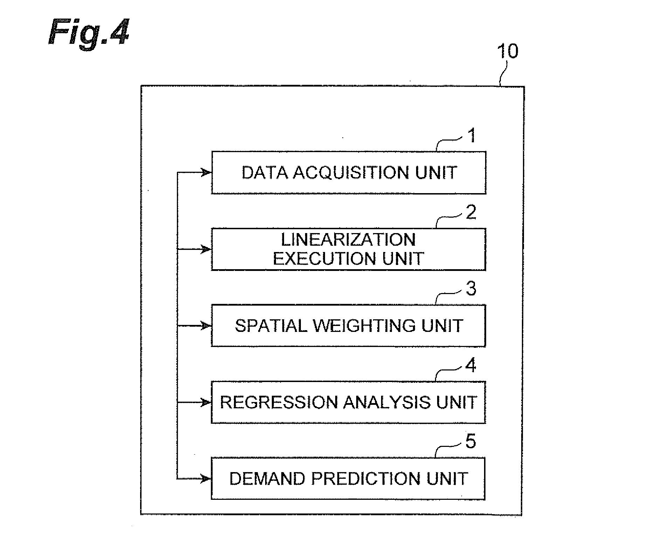

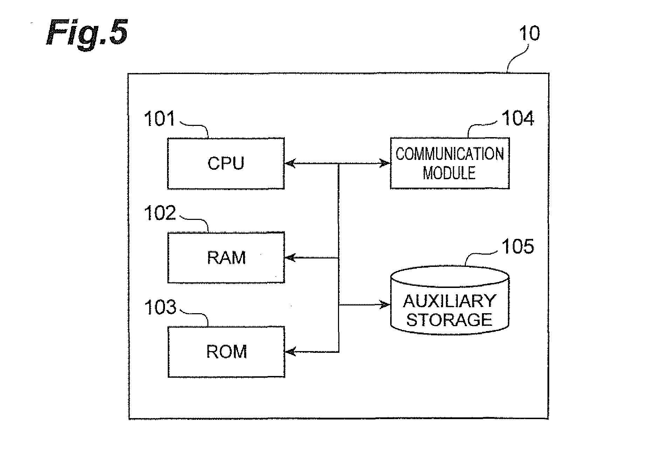

Subsequently, a structure of the demand prediction server will be described with reference to Fig. 4 and Fig. 5. Fig. 4 is a function block diagram for explaining an outline of a functional module structure of this demand prediction server 10, and Fig. 5 is a physical structure diagram for explaining an outline of a physical structure of the demand prediction server 10.

The demand prediction server 10, as depicted in Fig. 5, is structured with hardware such as a CPU 101, a RAM 102, a ROM 103, a communication module 104, and an auxiliary storage 105 as physical structure elements. These structure elements operate, whereby each function described below is exerted.

The demand prediction server 10 includes, as depicted in Fig. 4, as functional structure elements, a data acquisition unit 1 (estimation acquisition means), a linearization execution unit 2 (event acquisition means), a spatial weighting unit 3 (distance acquisition means), a regression analysis unit 4 (prediction means), and a demand prediction unit 5 (prediction means).

The data acquisition unit 1 is a unit that acquires estimated population information indicating population or population distribution estimated in the predetermined areas M1 to M9 described above. The estimated population information is stored by the data acquisition unit 1 in a storage format described later together with area IDs for identification for determining the predetermined areas M1 to M9, area polygons indicating shapes of these areas, and time indicating hours when this estimated population information is effective.

Herein, the data acquisition unit 1, during a predetermined time period (e.g., within one hour) in the predetermined areas M1 to M9, may acquire count information on the number of processes in which a position registering process with a telecommunications carrier is performed by a mobile terminal such as a cellular phone terminal as the estimated population information, may acquire count information based on data by static positioning as the estimated population information, and may acquire population information on population based on statistics for each of day and night as the estimated population information. The data acquisition unit 1 acquires the estimated population information every time the predetermined time period elapses (e.g., every one hour). The data acquisition unit 1 acquires this count information by receiving it from the telecommunications carrier, for example.

In addition, the data acquisition unit 1 can acquire weather information on weather in the predetermined areas M1 to M9, and also acquire estimated population information based on this weather information. Furthermore, the data acquisition unit 1 can acquire event information on the event E held in the predetermined areas M1 to M9, and also acquire estimated population information based on this event information.

The linearization execution unit 2 is a unit that acquires scale information and event position information on the event E in the predetermined areas M1 to M9. The scale information is information indicating population such as the number of visitors that the event E attracts, and the event position information is information indicating a place where supply of a dispatch service of a taxi is required relatively strongly due to holding of the event E.

Herein, the linearization execution unit 2 converts the estimated population information D05 described later for an area overlapping the prediction reference area A1 for which the number of demands is to be predicted, the weather information D06 on weather or temperature described later for the area overlapping the prediction reference area A1, the event information on the event E or opening hours thereof for the area overlapping the prediction reference area A1, and the like into numbers, and performs linearization for linear regression. As described above, because information for the area overlapping the prediction reference area A1 is necessary, mesh shapes that the respective pieces of information such as the estimated population information D05 and the weather information D06 have may be different from each other. A function used in performing linearization is set by referring to a scatter diagram of a target variable (the number of demands for a taxi) and each of the explanatory variables (e.g., a diagram indicating a proportional relationship or a quadratic functional relationship), for example.

It should be noted that the prediction reference area A1 covers part of the road R, and this road R is stored as a road line together with a road ID for identification by the linearization execution unit 2 in a storage format described later.

The spatial weighting unit 3 is a unit that acquires reference distance information indicating the distance between the position of the event E that the event position information acquired by the linearization execution unit 2 indicates and the position of the prediction reference area A1 for which the number of demands is to be predicted. In addition, the spatial weighting unit 3 acquires relative distance information indicating the distance between the position of the prediction reference area A1 and each of positions of the prediction target areas A2 to A4 located on the same road R as the prediction reference area A1. Furthermore, the spatial weighting unit 3 acquires facility information on attributes (region attribute information) of facilities (e.g., facilities around a station and a bus stop, around a hospital, or around an area with no public transportation service) in a region in which each of the prediction reference area A1 and the prediction target areas A2 to A4 is included.

Then, the spatial weighting unit 3, using the relative distance information thus acquired, performs a spatial weighting (geographical weighting) process in regression analysis together with the regression analysis unit 4. While conventional regression analysis is performed so that the sum square of residuals of the respective regression formulae becomes minimum, the spatial weighting unit 3 takes into account that regression formulae for geometrically closer areas are more similar to each other (i.e., coefficients of the explanatory variables are close). In other words, the spatial weighting unit 3, when calculating the sum square of the residuals, assigns weights to emphasize such geometrically close areas. For example, it is taken into account that as the distance between the prediction reference area A1 and any of the prediction target areas on the same road R as the prediction reference area A1 becomes shorter, their regression formulae becomes more similar.

It should be noted that a facility ID for identification for determining a facility, a polygon indicating a shape of this facility, and influence that this facility exerts on population change as the facility information described above are stored by the spatial weighting unit 3 in a storage format described later.

The regression analysis unit 4 is a unit that, by performing regression analysis using the estimated population information acquired by the data acquisition unit 1 and the explanatory variable based on the scale information acquired by the linearization execution unit 2 and the reference distance information acquired by the spatial weighting unit 3, calculates and generates data for prediction such as a regression formula including an explanatory variable used in predicting the number of demands in the prediction reference area A1.

In addition, the regression analysis unit 4 assigns weights such that as the distance that the reference distance information acquired by the spatial weighting unit 3 indicates becomes shorter, the above-mentioned explanatory variable becomes larger. Furthermore, the regression analysis unit 4, by performing regression analysis assigning weights such that residuals become smaller, calculates coefficients of the explanatory variables in the regression formulae, and predicts the number of demands in the prediction target areas A2 to A4. Regarding the coefficients of the explanatory variables in the regression formulae, as the distance that the relative distance information acquired by the spatial weighting unit 3 indicates (e.g., $d_{ij}$ described later) becomes shorter, the coefficients of the explanatory variables becomes closer values (i.e., the regression formulae become more similar). Alternatively, the regression analysis unit 4, based on the attributes that the facility information acquired by the spatial weighting unit 3 indicates, can calculate the coefficients of the explanatory variables in the regression formulae used for predicting the number of demands. Accordingly, for example, when dispatch of a taxi is performed for a relatively wide place such as the vicinity of a station, because such a place is an area that exerts influence on demands for a taxi over a wide range, the coefficients of the explanatory variables in the regression formulae used for predicting the number of demands become closer values. A point indicating a location where a ride in a taxi by a passenger is actually performed, which is used for calculating the above-mentioned explanatory variables, and time indicating the date and time when the ride is performed are stored by the regression analysis unit 4 in a storage format described later.

Hereinafter, the regression formulae calculated by the regression analysis unit 4 will be described. The regression analysis unit 4, for the following numerical formulae (1) to (3) for obtaining a target variable $K_i$ indicating the number of demands in a position $i$ of the prediction reference area A1, obtains optimum coefficients (e.g., $\beta_{in}$ ($n$ is 0,..., $n$)) of the explanatory variables in the position $i$ that achieve the best fit, and fixes them as a regression formula for obtaining the number of demands in the position $i$. In addition, $x_{ni}$ ($n$ is 0, ..., $n$) are values of linearized population, a rainfall amount, and a temperature in the position $i$, and $\varepsilon_i$ is a residual indicating a difference between the predicted number of demands by using the regression formula and the actual number of rides. Herein, $\beta_{in}$ ($n$ is 0, ..., $n$) is obtained such that the value of the following numerical formula (4) in which $\varepsilon_i, \varepsilon_j, \varepsilon_k$, ... are used becomes minimum. In addition, $d_{ij}$ indicates a distance

between two positions of the position $i$ and a position $j$, and $b_i$ is a value that is changed in accordance with the position i (more specifically, an attribute that the facility information indicates).

[Numeral 1]

$$k_i = \beta_{i0} + \beta_{i1}x_{1i} + \beta_{i2}x_{2i} + \cdots + \varepsilon_i \quad \cdots(1)$$

[Numeral 2]

$$k_j = \beta_{i0} + \beta_{i1}x_{1j} + \beta_{i2}x_{2j} + \cdots + \varepsilon_j \quad \cdots(2)$$

[Numeral 3]

$$k_k = \beta_{i0} + \beta_{i1}x_{1k} + \beta_{i2}x_{2k} + \cdots + \varepsilon_k \quad \cdots(3)$$

[Numeral 4]

$$\varepsilon_i^2 + \frac{\varepsilon_j^2}{\exp((\frac{d_{ij}}{b_j})^2)} + \frac{\varepsilon_k^2}{\exp((\frac{d_{ik}}{b_k})^2)} + \cdots \quad \cdots(4)$$

Next, the regression analysis unit 4 sets the area A2 as a prediction reference area and, in order to fix the regression formula for obtaining the number of demands, assigns "$j$" to the subscript "$i$" in the above numerical formulae (1) to (4), and fixes them as regression formulae for obtaining the number of demands in the position $j$. In this manner, after the completion of the process on the area A1, other areas such as the area A2 and the area A3 are changed to prediction reference areas, and processes on the respective areas are performed in the same manner.

In addition, the regression analysis unit 4 calculates coefficients β of explanatory variables based on the attributes that the facility information stored in the spatial weighting unit 3 indicates and predicts the number of demands. More specifically, weights of residuals in spatial regression analysis are considered based on the attributes that the facility information indicates, and the coefficients β of the explanatory variables are calculated. For example, when dispatch of a taxi is performed for a relatively wide place such as the vicinity of a station, because such a place is an area that exerts influence on demands for a taxi over a wide range (i.e., an area in which the above-described $b_i$ as influence described later is relatively large), the coefficients β of the explanatory variables in the regression formulae used for predicting the number of demands become closer values (i.e., a range in which regression formulae are similar becomes relatively wide). On the other hand, when dispatch of a taxi is performed for a relatively small place such as the vicinity of a hospital (particularly in a local place such as an entrance exclusively for patients), because such a place is an area that exerts influence on demands for a taxi within a small range (i.e., a range in which the above-described $b_i$ as influence described later is relatively small), the coefficients β of the explanatory variables in the regression formulae used for predicting the number of demands become more different values (i.e., a range in which regression formulae are similar becomes relatively small).

The demand prediction unit 5 is a unit that, using the data for prediction generated by the regression analysis unit 4, predicts the number of demands in each of the prediction reference area A1 and the prediction target areas A2 to A4. The demand prediction unit 5 can visualize the prediction results by displaying them on a map with different colors in accordance with the number of demands as the prediction results. The regression formula including explanatory variables used in predicting the number of demands in each of the prediction reference area A1 and the prediction target areas A2 to A4 and the number of demands obtained by using this formula are stored by the demand prediction unit 5 in a storage format described later.

(3) Example of Storage Format for Area ID and Estimated Population Information

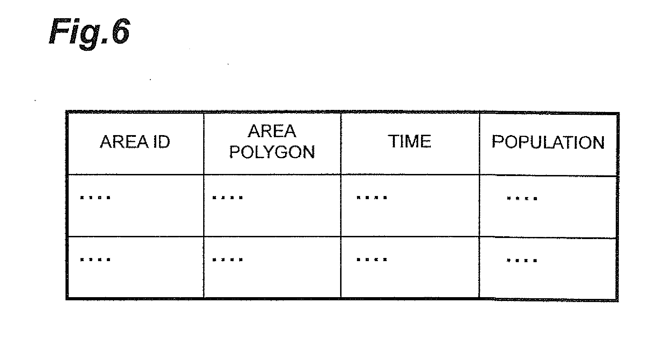

Subsequently, one example of a storage format for an area ID and estimated population information stored by the data acquisition unit 1 will be described with reference to Fig. 6. Fig. 6 is a DB structure diagram illustrating one example of a storage format for area ID and estimated population information.

As depicted in Fig. 6, in the data acquisition unit 1, area IDs for identification for determining predetermined areas, area polygons indicating shapes of the areas, time indicating hours when estimated population information thereof is effective, and the estimated population information in the areas are stored in association with each other.

(4) Example of Storage Format for Area ID and Rainfall Amount

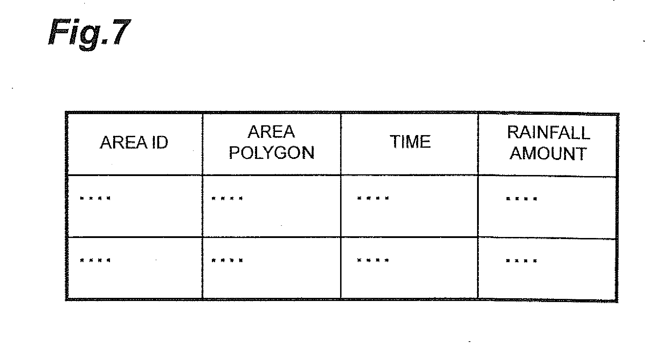

Subsequently, one example of a storage format for an area ID and a rainfall amount being weather information stored by the data acquisition unit 1 will be described with reference to Fig. 7. Fig. 7 is a DB structure diagram illustrating one example of a storage format for an area ID and a rainfall amount.

As depicted in Fig. 7, in the data acquisition unit 1, area IDs for identification for determining predetermined areas, area polygons indicating shapes of the areas, time indicating hours when information on rainfall amounts thereof is effective, and the rainfall amounts are stored in association with each other.

(5) Example of Storage Format for Area ID and Temperature

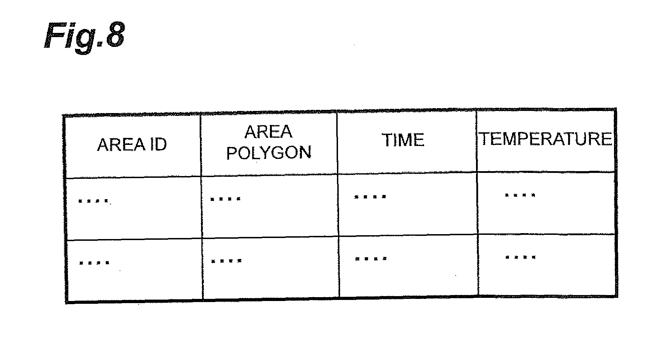

Subsequently, one example of a storage format for an area ID and a temperature being weather information stored by the data acquisition unit 1 will be described with reference to Fig. 8. Fig. 8 is a DB structure diagram illustrating one example of a storage format for an area ID and a temperature.

As depicted in Fig. 8, in the data acquisition unit 1, area IDs for identification for determining predetermined areas, area polygons indicating shapes of the areas, time indicating hours when information on temperatures thereof is effective, and the temperatures are stored in association with each other.

(6) Example of Storage Format of Event Information

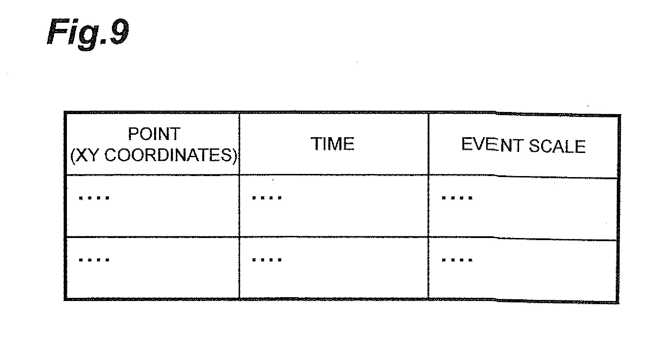

Subsequently, one example of a storage format for event information stored by the data acquisition unit 1 will be described with reference to Fig. 9. Fig. 9 is a DB structure diagram illustrating one example of a storage format for event information.

As depicted in Fig. 9, in the data acquisition unit 1, points indicating center positions of event venue areas in x and y coordinates (i.e., latitude and longitude), time indicating opening hours of the events, and event scales indicating the number of audiences, the number of customers, or the number of visitors to the events are stored in association with each other.

(7) Example of Storage Format for Road ID and Road Line

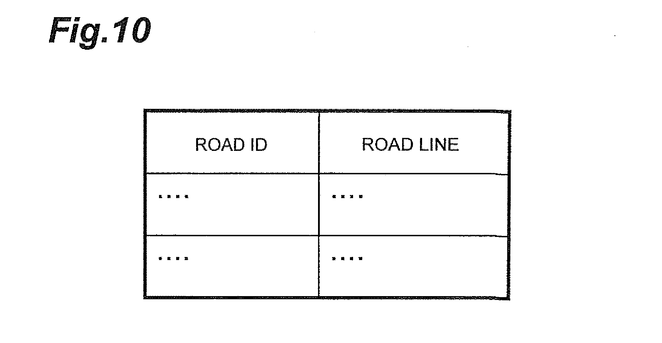

Subsequently, one example of a storage format for a road ID and a road line stored by the linearization execution unit 2 will be described with reference to Fig. 10. Fig. 10 is a DB structure diagram illustrating one example of a storage format for a road ID and a road line.

As depicted in Fig. 10, in the linearization execution unit 2, road lines and road IDs for identification each of which is uniquely assigned to each of the road lines are stored in association with each other.

(8) Example of Storage Format for Facility ID and Influence

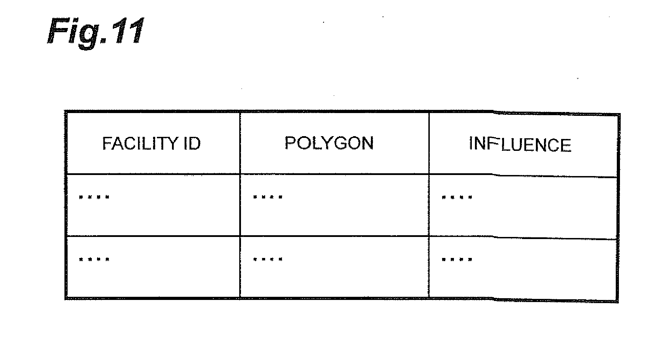

Subsequently, one example of a storage format for a facility ID and influence that are facility information stored by the spatial weighting unit 3 will be described with reference to Fig. 11. Fig. 11 is a DB structure diagram illustrating one example of a storage format for a facility ID and influence.

As depicted in Fig. 11, in the spatial weighting unit 3, facility IDs for identification each of which is uniquely assigned to each of facilities around a station and a bus stop, around a hospital, or around an area with no public transportation service, for example, polygons of these facilities, and influence by the facilities are stored in association with each other. As the influence thereof, a default value $b_n$ ($n$ is $j$, ..., $k$) is initially set and, as described above, when dispatch of a taxi is performed for a relatively wide place such as the vicinity of a station, because such a place is an area to be predicted that exerts influence on demands for a taxi over a wide range, a value larger than this default value $b_n$ is set as a geographical weight. In the same manner, when dispatch of a taxi is performed for a relatively small place such as the vicinity of a hospital (particularly in a local place such as an entrance exclusively for patients), because such a place is an area to be predicted that exerts influence on demands for a taxi within a small range, a value smaller than this default value $b_n$ is set as a geographical weight.

(9) Example of Storage Format for Location and Date and Time

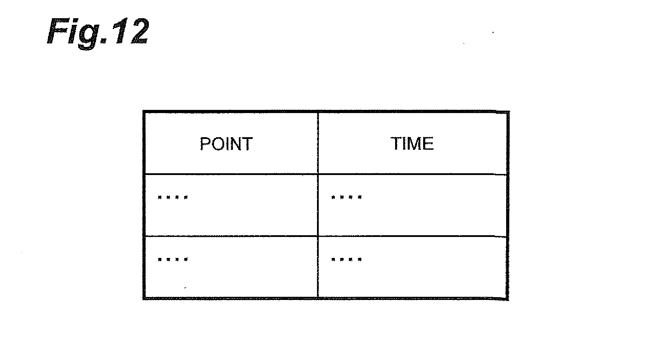

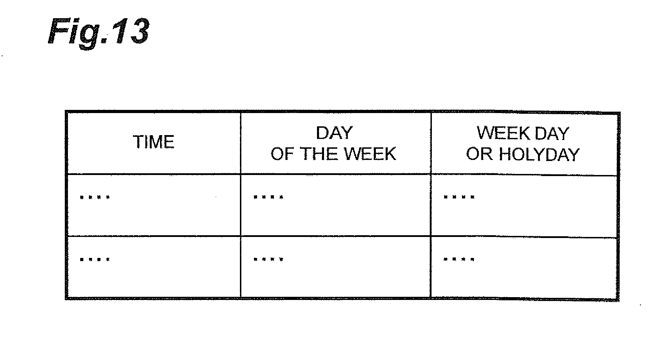

Subsequently, one example of a storage format for a location where and a date and time when a ride is performed, stored by the regression analysis unit 4, will be described with reference to Fig. 12 and Fig. 13. Fig. 12 is a DB structure diagram illustrating one example of a storage format for a point that indicates a location where a ride in a taxi by a passenger is actually performed in x and y coordinates (i.e., latitude and longitude) and time indicating a date and time when the ride in a taxi is performed. In addition, Fig. 13 is a DB structure diagram illustrating one example of a format for a day of the week corresponding to time indicating a date and time when a ride is performed and whether the day is a weekday or a holiday.

As depicted in Fig. 12, in the regression analysis unit 4, points and time are stored in association with each other. In addition, as depicted in Fig. 13, as calendar information, days of the week corresponding to time indicating days and time when rides are performed, and whether the days are weekdays or holidays are stored therein in association with each other.

(10) Example of Storage Format for Information Stored in association with Area ID

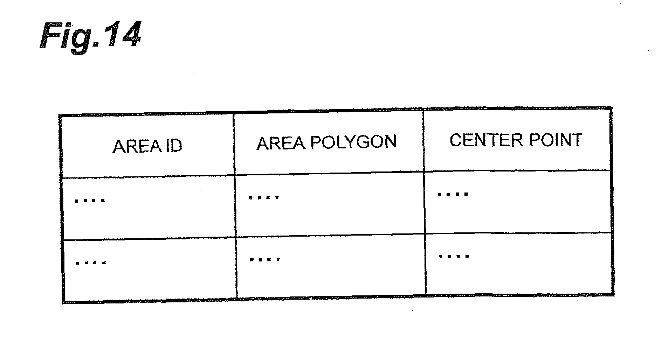

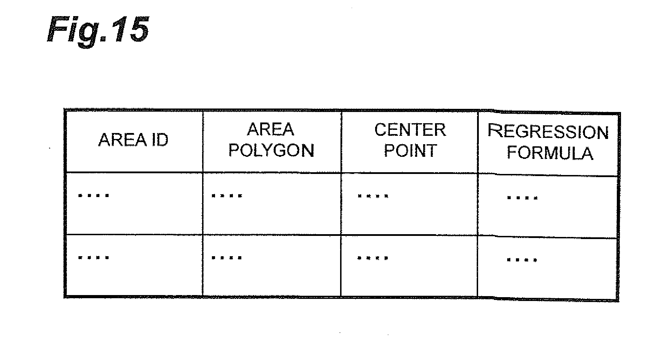

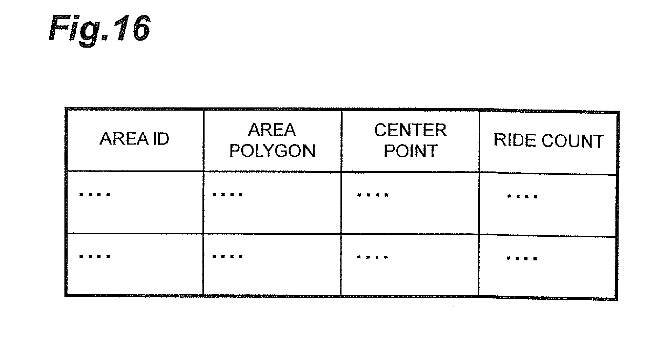

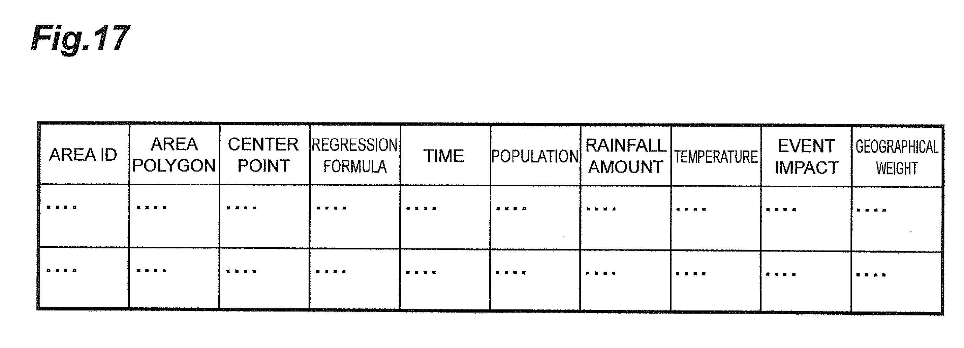

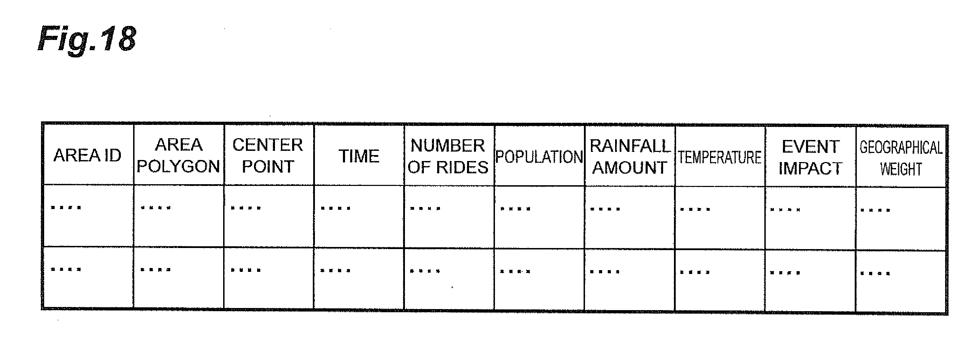

Subsequently, one example of a storage format for information stored in association with an area ID, stored by the demand prediction unit 5, will be described with reference to Fig. 14 to Fig. 18. Fig. 14 is a DB structure diagram illustrating one example of a storage format for an area ID and a center point, and Fig. 15 is a DB structure diagram illustrating one example of a storage format for an area ID and a regression formula as regression formula data D11 described later. In addition, Fig. 16 is a DB structural diagram illustrating one example of a storage format for an area ID and the predicted number of rides that can be considered to be the predicted number of demands, and Fig. 17 is a DB structural diagram illustrating one example of a storage format for an area ID and a regression formula as data for prediction D17 described later. Furthermore, Fig. 18 is a DB structural diagram illustrating one example of a storage format for an area ID and various information as past actual result data.

As depicted in Fig. 14, in the demand prediction unit 5, area IDs for identification for determining predetermined areas, area polygons indicating shapes of the areas, and center points indicating the positions of centers such as centroids of the areas in x and y coordinates (i.e., latitude and longitude) are stored in association with each other.

In addition, as depicted in Fig. 15, in the demand prediction unit 5, as regression formula data D11 described later, area IDs, area polygons, center points, and regression formulae used for predicting the number of demands for corresponding predetermined areas are stored in association with each other.

Furthermore, as depicted in Fig. 16, in the demand prediction unit 5, as prediction results, area IDs, area polygons, center points, and the predicted number of rides obtained by using corresponding formulae are stored in association with each other.

In addition, as depicted in Fig. 17, in the demand prediction unit 5, as data for prediction D17 described later, area IDs, area polygons, center points, regression formulae, time indicating hours when information on rainfall amounts and temperatures is effective, population at ordinary times when no event is held, rainfall amounts, temperatures, event impacts indicating the number of audiences, the number of customers, or the number of visitors when events are held, and geographical weight values described above are stored in association with each other.

Furthermore, as depicted in Fig. 18, in the demand prediction unit 5, as past result data, area IDs, area polygons, center points, time indicating hours when information on rainfall amounts and temperatures is effective, the number of rides in which rides are actually performed by passengers, population at ordinary times when no event is held, rainfall amounts, temperatures, the above-mentioned event impacts, and geographical weighting values described above are stored in association with each other.

(11) Flow of Area Extraction Processes for Extracting Predetermined Area Overlapping Road

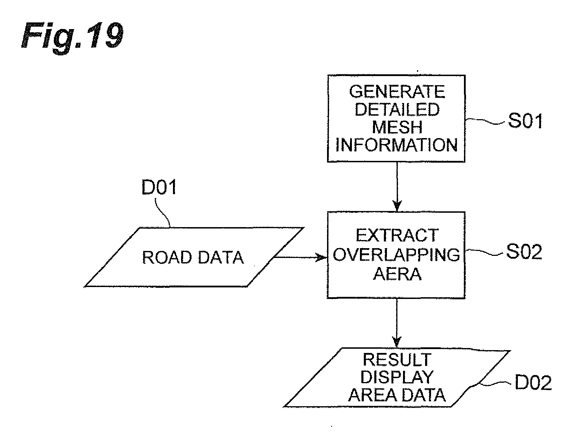

Subsequently, a flow of area extraction processes for extracting a predetermined area overlapping a road, performed by the data acquisition unit 1, will be described with reference to Fig. 19. Fig. 19 is a flowchart illustrating the flow of the area extraction processes for extracting a predetermined area overlapping a road.

To begin with, the data acquisition unit 1 determines and generates detailed mesh information that includes boundary information for specifying predetermined areas sectioned in a mesh pattern each of which is rectangular with sides in optional size of approximately 10 to 500 meters (step S01). The whole of the predetermined areas has a generally rectangular shape with vertical sides and horizontal sides each of which is several kilometers to several tens of kilometers long. It should be noted that the shapes of the predetermined areas are not limited to those in a mesh pattern.

Next, the data acquisition unit 1, using the road data D01 indicating a field of the road R, checks overlapping of the predetermined areas in a mesh pattern and the road R, extracts a predetermined area overlapping the road R as the prediction reference area A1, acquires estimated population information indicating population estimated in this predetermined area, and accordingly generates result display area data D02 (step S02, estimation acquisition step). Then, a series of the area extraction processes end.

(12) Flow of Regression Formula Calculation Processes for Calculating Regression Formulae

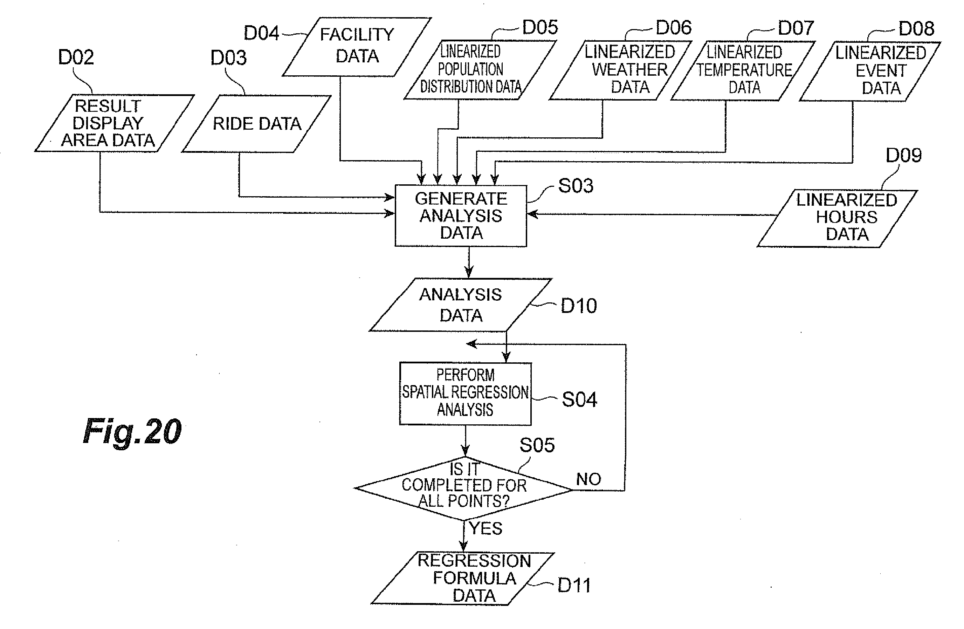

Subsequently, regression formula calculation processes for calculating regression formulae that are performed by the linearization execution unit 2, the spatial weighting unit 3, and the regression analysis unit 4 will be described with reference to Fig. 20. Fig. 20 is a flowchart illustrating a flow of the regression formula calculation processes for calculating regression formulae.

To begin with, other than the result display area data D02 generated by the data acquisition unit 1, ride data D03 that indicates the points of riding positions and riding days and time stored by the regression analysis unit 4 (see Fig. 12); linearized event data D08 that includes scale information and event position information on the event E acquired by the linearization execution unit 2; facility data D04 that indicates facility IDs, polygons, and influence stored by the spatial weighting unit 3 (see Fig. 11); linearized population distribution data D05, linearized weather data D06, linearized temperature data D07, and linearized hours data D09 that are linearized by the linearization execution unit 2 are generated (event acquisition step).

Then, the spatial weighting unit 3 acquires these pieces of data, acquires reference distance information indicating a distance between the position of event E and the prediction reference area A1 and in addition, acquires relative distance information indicating a distance between the prediction reference area A1 and a prediction target area (herein, the prediction target area A2 is set) (distance acquisition step), performs an analysis process together by the regression analysis unit 4, and accordingly generates analysis data D10 (step S03). Herein, more specifically, a join operation of the ride data D03 as a first process, a join operation of the linearized population distribution data D05 as a second process, a join operation of the linearized weather data D06 as a third process, a join operation of the linearized temperature data D07 as a fourth process, a join operation of the linearized event data D08 as a fifth process, a join operation of the facility data D04 as a sixth process, and a join operation of the linearized hours data D09 as a seventh process are performed.

In the join operation of the ride data D03 as the first process, a process of counting the number of riding points for each of specified hours (e.g., from 1:00 to 2:00, from 2:00 to 3:00) included in each of the respective area polygons and adding the result to "the number of rides" is performed.

In the join operation of the linearized population distribution data D05 as the second process, a process of adding population values for the time corresponding to target areas of the linearized population distribution data D05 overlapping the center points to the "population" is performed.

In the join operation of the linearized weather data D06 as the third process, a process of adding rainfall amount values for the time corresponding to target areas of the linearized weather data D06 overlapping the center points to the "rainfall amount" is performed.

In the join operation of the linearized temperature data D07 as the fourth process, a process of adding temperature values for the time corresponding to target areas of the linearized temperature data D07 overlapping the center points to the "temperature" is performed.

In the join operation of the linearized event data D08 as the fifth process, a process of calculating distances from the center points to the respective points of the event data, multiplying the event scales by damping functions due to the distances, and adding the sum of these results for all of the events to the "event impact" is performed.

In the join operation of the facility data D04 as the sixth process, a process of adding influence of the respective polygons of the facility data D04 overlapping the center points to the "geographical weight" is performed. It should be noted that when there are no overlapping polygons, a fixed number is initially set as the default value $b_n$ ($n$ is $j$, ..., $k$).

In the join operation of the linearized hours data D09 as the seventh process, a process of adding the corresponding hours values is performed.

Next, the regression analysis unit 4, using the analysis data D10 generated, performs spatial regression analysis for positions or areas (e.g., position $i$) for which spatial regression analysis has not been performed (step S04, prediction step). Herein, residuals $\varepsilon_i$, $\varepsilon_j$, $\varepsilon_k$, ... are obtained. Then, the regression analysis unit 4 determines whether execution of spatial regression analysis has been completed for all of the points or the areas for which the number of demands is to be predicted or not (step S05, prediction step). When there is a point or an area for which execution of spatial regression analysis has not been performed (e.g., position j), the procedure moves back to the above step S04, and spatial regression analysis is performed (for the position j, herein). More specifically, for example, by assigning "*j*" to the subscript "*i*" in the above formula (1) to (4), residuals $\varepsilon_i$, $\varepsilon_j$, $\varepsilon_k$, ... are obtained in the same manner. In contrast, when execution of spatial regression analysis has been completed for all of the points and the areas for which the number of demands is to be predicted, the regression analysis unit 4, based on the execution results of the spatial regression analysis, calculates and generates the regression formula data for prediction D11 such as regression formulae including explanatory variables used in predicting the number of demands. Then, a series of regression formula calculation processes end.

(13) Flow of Data Generation Processes for Generating Prediction Result Data

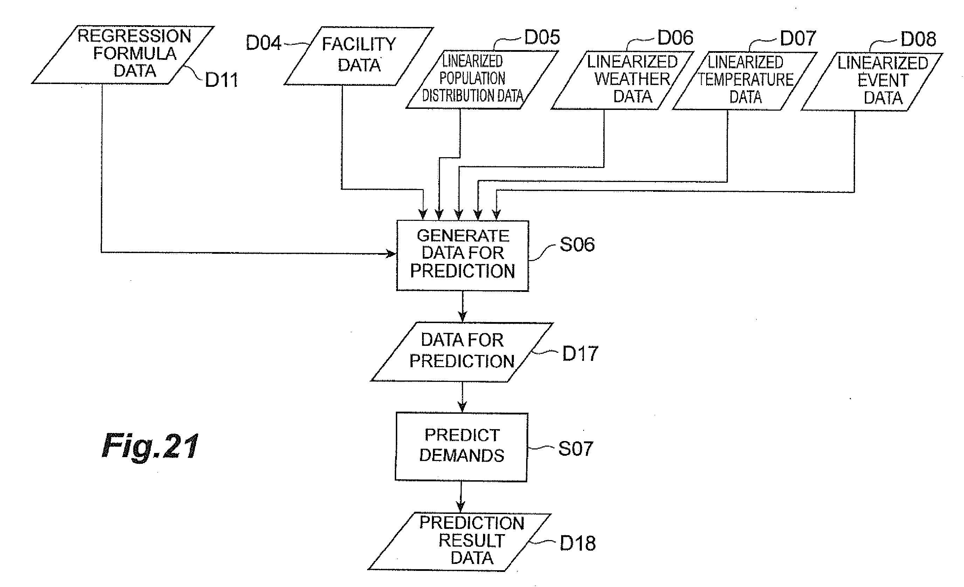

Subsequently, a flow of data generation processes for generating prediction result data by substituting prediction values of the respective explanatory variables into regression formulae performed by the demand prediction unit 5 will be described with reference to Fig. 21. Fig. 21 is a flowchart illustrating a flow of the data generation processes for generating the prediction result data.

To begin with, other than the regression formula data for prediction D11 generated by the regression analysis unit 4, using the facility data D04 (see Fig. 11), the linearized population distribution data D05, the linearized weather data D06, the linearized temperature data D07, the linearized event data D08, and the linearized hours data D09, the demand prediction unit 5 generates the data for prediction D17 in which the areas and the dates and time for which the number of demands is to be predicted and the regression formula data for prediction D11 are associated with each other (step S06, prediction step). Herein, more specifically, a join operation of the linearized population distribution data D05 as a first process, a join operation of the linearized weather data D06 as a second process, a join operation of the linearized temperature data D07 as a third process, a join operation of the linearized event data D08 as a fourth process, a join operation of the facility data D04 as a fifth process, and a join operation of the linearized hours data as a sixth process are performed.

In the join operation of the linearized population distribution data D05 as the first process, a process of adding population values for the time corresponding to target areas of the linearized population distribution data D05 overlapping the center points to the "population" is performed.

In the join operation of the linearized weather data D06 as the second process, a process of adding rainfall amount values for the time corresponding to target areas of the linearized weather data D06 (predicted values) overlapping the center points to the "rainfall amount" is performed.

In the join operation of the linearized temperature data D07 (predicted values) as the third process, a process of adding temperature values for the time corresponding to target areas of the linearized temperature data D07 overlapping the center points to the "temperature" is performed.

In the join operation of the linearized event data D08 (predicted values) as the fourth process, a process of calculating distances from the center points to the respective points of the event data, multiplying the event scales by damping functions due to the distances, and adding the sum of these results for all of the events to the "event impact" is performed.

In the join operation of the facility data D04 as the fifth process, a process of adding influence of the respective polygons of the facility data D04 overlapping the center points to the "geographical weight" is performed. It should be noted that when there are no overlapping polygons, a fixed number is initially set as the default value $b_n$ (n is j, ..., k).

In the join operation of the linearized hours data as the sixth process, a process of adding the corresponding hours values is performed.

It should be noted that as the predicted values of the linearized population distribution data D05, for example, average values of attributes on the day of prediction (e.g., a day of the week, time, a holiday or a weekday) are used. In addition, as the predicted values of the linearized weather data D06 and the linearized temperature data D07, for example, weather forecast data is used. Furthermore, as the predicted values of the linearized event data D08, for example, information posted on an event aggregator site or searched results by an event finding algorithm are used.

Then, the demand prediction unit 5, using the data for prediction D17 generated, predicts the number of demands in the prediction reference area A1 and the prediction target areas A2 to A4 (step S07, prediction step), and calculates and generates the prediction result data D18 indicating the prediction results (see Fig. 15). Then, a series of the data generation processes end.

(14) Functions and Effects according to Present Invention

The demand prediction server 10 initially acquires estimated population information indicating population estimated in a predetermined area, and acquires relative distance information indicating a distance between a position of a prediction reference area included in the predetermined area and a position of a prediction target area for which the number of demands is to be predicted with the prediction reference area as a reference. Then, the demand prediction server 10, by performing regression analysis using the estimated population information and a residual based on the relative distance information, predicts the number of demands in the prediction target area. It should be noted that the demand prediction server 10 assigns weights such that the residual becomes smaller as the distance that the relative distance information indicates becomes shorter.

Herein, there is a correlation that as the population indicated by the estimated population information acquired increases, the number of people estimated to need supply of the service increases. The demand prediction server 10 predicts the number of demands by performing regression analysis not only considering the above-described estimated population information that has the correlation with the number of people estimated to need the supply of the service, but also considering as geographical data a condition in which as the distance between the position of the prediction reference area and the position of the prediction target area becomes shorter, the residual being a difference in predicting the number of demands becomes smaller, and thus it is possible to perform demand prediction with higher accuracy.

In addition, the demand prediction server 10 initially acquires the estimated population information, scale information, and event position information, and acquires reference distance information indicating a distance between a position of an event that the event position information indicates and the position of the prediction reference area. Then, the demand prediction server 10, by performing regression analysis using the estimated population information and a residual based on the scale information and the reference distance information, predicts the number of demands in the prediction reference area. It should be noted that the demand prediction server 10 assigns weights such that the explanatory variable based on the scale information and the reference distance information becomes larger as the distance that the reference distance information indicates becomes shorter.

Herein, there is a correlation that as the population indicated by the estimated population information acquired increases, the number of people estimated to need supply of the service increases. The demand prediction server 10 predicts the number of demands by performing regression analysis not only considering the above-described estimated population information that has the correlation with the number of people estimated to need the supply of the service, but also considering as geographical data a condition in which as the distance between the position of the event and the position of the prediction reference area becomes shorter, the above-described explanatory variable becomes larger, and thus it is possible to perform demand prediction with higher accuracy.

In addition, there is a correlation that as the number of performed position registering processes indicated by count information increases, the number of users of mobile phones is estimated to be larger, and thus the number of people who need the supply of the service increases. Accordingly, with this structure, it becomes possible to estimate dynamic changes in population, making it possible to perform demand prediction with higher accuracy.

In addition, because the number of demands is predicted with weather information on weather in the predetermined area considered, it becomes possible to perform demand prediction with higher accuracy.

In addition, it becomes possible to predict the number of demands with higher accuracy on the basis of an attribute of a region in which the prediction reference area and the prediction target area are included.

(15) Example of Modification

In the above-described embodiments, the demand prediction server 10 has been described to be a device that is installed in a taxi company and predicts demands from users who want to use a dispatch service of a taxi, but contents of a service are not particularly limited, for example, it may be prediction of the number of rides as a target variable in a transportation service by other public transportation such as a train, a bus, and a new transportation system, and also may be prediction of sales (trade area analysis) as a target variable in merchandising services.

**Industrial Applicability**

According to the present invention, it is possible to perform demand prediction with higher accuracy.

**Reference Signs List**

1... data acquisition unit, 2... linearization execution unit, 3... spatial weighting unit, 4... regression analysis unit, 5... demand prediction unit, 10... demand prediction server, 101... CPU, 102...RAM, 103... ROM, 104...communication module, 105... auxiliary storage, A1... prediction reference area, A2 to A4... prediction target area, D01... road data, D02... result display area data, D03... ride data, D04... facility data, D05... linearized population distribution data, D06... linearized weather data, D7... linearized temperature data, D08... linearized event data, D09... linearized hours data, D10... analysis data, D11... regression formula data for prediction, D17... data for prediction, D18... prediction result data, E... event, G... area group, M1 to M9... area, R... road

**Claims**

1. A demand prediction device that predicts the number of demands of users who want to use a service, the demand prediction device comprising:

   estimation acquisition means for acquiring estimated population information that indicates population estimated in a predetermined area;
   distance acquisition means for acquiring relative distance information that indicates a distance between a position of a prediction reference area included in the predetermined area and a position of a prediction target area for which the number of demands is to be predicted with the prediction reference area as a reference; and
   prediction means for, by performing regression analysis using the estimated population information acquired by the estimation acquisition means and a residual based on the relative distance information acquired by the distance acquisition means, predicting the number of demands in the prediction target area, wherein
   the prediction means predicts the number of demands by assigning weights such that the residual becomes smaller as the distance that the relative distance information indicates becomes shorter.

2. A demand prediction device that predicts the number of demands of users who want to use a service, the demand prediction device comprising:

   estimation acquisition means for acquiring estimated population information that indicates population estimated in a predetermined area;
   event acquisition means for acquiring scale information and event position information on an event in the predetermined area;
   distance acquisition means for acquiring reference distance information that indicates a distance between a position of the event that the event position information acquired by the event acquisition means indicates and a position of a prediction reference area for which the number of demands is to be predicted; and
   prediction means for, by performing regression analysis using the estimated population information acquired by the estimation acquisition means and an explanatory variable based on the scale information of the event acquired by the event acquisition means and the reference distance information acquired by the distance acquisition means, predicting the number of demands in the prediction reference area, wherein
   the prediction means predicts the number of demands by assigning weights such that the explanatory variable becomes larger as the distance that the reference distance information indicates becomes shorter.

3. The demand prediction device according to claim 2, wherein
   the distance acquisition means acquires relative distance information that indicates a distance between a position of the prediction reference area included in the predetermined area and a position of a prediction target area that is located on the same road as that on the prediction reference area and for which the number of demands is to be predicted, and
   the prediction means, by performing regression analysis using a residual that is based on the relative distance information acquired by the distance acquisition means and becomes smaller as the distance that the relative distance information indicates becomes shorter, predicts the number of demands in the prediction target area.

4. The demand prediction device according to any one of claims 1 to 3, wherein
   the estimation acquisition means acquires count information on the number of processes in which a position registering process is performed by a mobile terminal within a predetermined time period in the predetermined area as the estimated population information.

5. The demand prediction device according to any one of claims 1 to 4, wherein
   the estimation acquisition means acquires weather information on weather in the predetermined area and also acquires the estimated population information based on the weather information.

6. The demand prediction device according to any one of claims 1 to 5, wherein
   the distance acquisition means acquires region attribute information on an attribute of a region in which the prediction reference area is included, and
   the prediction means calculates a coefficient of an explanatory variable based on the attribute that the region attribute information acquired by the distance acquisition means indicates to predict the number of demands.

7. A demand prediction method executed by a demand prediction device predicting the number of demands of users who want to use a service, the demand prediction method comprising:

an estimation acquisition step of, by the demand prediction device, acquiring estimated population information that indicates population estimated in a predetermined area;

a distance acquisition step of, by the demand prediction device, acquiring relative distance information that indicates a distance between a position of a prediction reference area included in the predetermined area and a position of a prediction target area for which the number of demands is to be predicted with the prediction reference area as a reference; and

a prediction step of, by the demand prediction device, by performing regression analysis using the estimated population information acquired at the estimation acquisition step and a residual based on the relative distance information acquired at the distance acquisition step by the demand prediction device, predicting the number of demands in the prediction target area, wherein

at the prediction step, the demand prediction device predicts the number of demands by assigning weights such that the residual becomes smaller as the distance that the relative distance information indicates becomes shorter.

8. A demand prediction method executed by a demand prediction device predicting the number of demands of users who want to use a service, the demand prediction method comprising:

an estimation acquisition step of, by the demand prediction device, acquiring estimated population information that indicates population estimated in a predetermined area;

an event acquisition step of, by the demand prediction device, acquiring scale information and event position information on an event in the predetermined area;

a distance acquisition step of, by the demand prediction device, acquiring reference distance information that indicates a distance between a position of the event that the event position information acquired at the event acquisition step indicates and a position of a prediction target area for which the number of demands is to be predicted; and

a prediction step of, by the demand prediction device, by performing regression analysis using the estimated population information acquired at the estimation acquisition step and an explanatory variable based on the scale information of the event acquired at the event acquisition step and the reference distance information acquired at the distance acquisition step by the demand prediction device, predicting the number of demands in the prediction target area, wherein

at the prediction step, the demand prediction device predicts the number of demands by assigning weights such that the explanatory variable becomes larger as the distance that the reference distance information indicates becomes shorter.

Fig.1

EP 2 506 193 A1

# Fig.2

D05

D06

D18

A1(A2,A3,A4)

# Fig.3

$$Y_i = b_{i0} + b_{i1}X_{i1} + b_{i2}X_{i2} + b_{i3}X_{i3} + b_{i4}X_{i4} + b_{i5}X_{i5} + \cdots$$

$$Y_k = b_{k0} + b_{k1}X_{k1} + b_{k2}X_{k2} + b_{k3}X_{k3} + b_{k4}X_{k4} + b_{k5}X_{k5} + \cdots$$

| NUMBER OF RIDES | ⇨ | REGRESSION ANALYSIS |
|---|---|---|

| FACILITY INFORMATION | ⇨ | SPATIAL WEIGHTING |
|---|---|---|

| LINEARIZATION | LINEARIZATION | LINEARIZATION | LINEARIZATION | LINEARIZATION |
|---|---|---|---|---|

| POPULATION (TARGET AREA) | WEATHER | TEMPERATURE | EVENT | HOURS |
|---|---|---|---|---|

EP 2 506 193 A1

# Fig.4

10

DATA ACQUISITION UNIT — 1

LINEARIZATION EXECUTION UNIT — 2

SPATIAL WEIGHTING UNIT — 3

REGRESSION ANALYSIS UNIT — 4

DEMAND PREDICTION UNIT — 5

*Fig.5*

10

101

CPU

104

COMMUNICATION
MODULE

102

RAM

103

ROM

105

AUXILIARY
STORAGE

# Fig.6

| AREA ID | AREA POLYGON | TIME | POPULATION |
|---------|--------------|------|------------|
| . . . . | . . . . | . . . . | . . . . |
| . . . . | . . . . | . . . . | . . . . |

# Fig.7

| AREA ID | AREA POLYGON | TIME | RAINFALL AMOUNT |
|---------|--------------|------|-----------------|
| . . . . | . . . . | . . . . | . . . . |
| . . . . | . . . . | . . . . | . . . . |

# Fig.8

| AREA ID | AREA POLYGON | TIME | TEMPERATURE |
|---------|--------------|------|-------------|
| . . . . | . . . . | . . . . | . . . . |
| . . . . | . . . . | . . . . | . . . . |

*Fig.9*

| POINT<br>(XY COORDINATES) | TIME | EVENT SCALE |
|---|---|---|
| . . . . | . . . . | . . . . |
| . . . . | . . . . | . . . . |

**EP 2 506 193 A1**

## Fig.10

| ROAD ID | ROAD LINE |
|---------|-----------|
| . . . . | . . . . |
| . . . . | . . . . |

# Fig.11

| FACILITY ID | POLYGON | INFLUENCE |
|-------------|---------|-----------|
| . . . . | . . . . | . . . . |
| . . . . | . . . . | . . . . |

# Fig.12

| POINT | TIME |
|-------|------|
| . . . . | . . . . |
| . . . . | . . . . |

## Fig.13

| TIME | DAY OF THE WEEK | WEEK DAY OR HOLYDAY |
|------|------|------|
| .... | .... | .... |
| .... | .... | .... |

# Fig.14

| AREA ID | AREA POLYGON | CENTER POINT |
|---------|--------------|--------------|
| . . . . | . . . . | . . . . |
| . . . . | . . . . | . . . . |

# *Fig.15*

| AREA ID | AREA POLYGON | CENTER POINT | REGRESSION FORMULA |
|---|---|---|---|
| . . . . | . . . . | . . . . | . . . . |
| . . . . | . . . . | . . . . | . . . . |

# Fig.16

| AREA ID | AREA POLYGON | CENTER POINT | RIDE COUNT |
|---------|--------------|--------------|------------|
| . . . . | . . . . | . . . . | . . . . |
| . . . . | . . . . | . . . . | . . . . |

# Fig.17

| AREA ID | AREA POLYGON | CENTER POINT | REGRESSION FORMULA | TIME | POPULATION | RAINFALL AMOUNT | TEMPERATURE | EVENT IMPACT | GEOGRAPHICAL WEIGHT |
|---------|--------------|--------------|--------------------|------|------------|-----------------|-------------|--------------|---------------------|
| · · · · | · · · · | · · · · | · · · · | · · · · | · · · · | · · · · | · · · · | · · · · | · · · · |
| · · · · | · · · · | · · · · | · · · · | · · · · | · · · · | · · · · | · · · · | · · · · | · · · · |

# Fig.18

| AREA ID | AREA POLYGON | CENTER POINT | TIME | NUMBER OF RIDES | POPULATION | RAINFALL AMOUNT | TEMPERATURE | EVENT IMPACT | GEOGRAPHICAL WEIGHT |
|---------|--------------|--------------|------|-----------------|------------|-----------------|-------------|--------------|---------------------|
| .... | .... | .... | .... | .... | .... | .... | .... | .... | .... |
| .... | .... | .... | .... | .... | .... | .... | .... | .... | .... |

## Fig.19

GENERATE
DETAILED
MESH
INFORMATION ~S01

D01

ROAD DATA

EXTRACT
OVERLAPPING
AERA ~S02

RESULT
DISPLAY
AREA DATA ~D02

**Fig.20**

**Fig.21**

REGRESSION FORMULA DATA — D11

D04 — FACILITY DATA

LINEARIZED POPULATION DISTRIBUTION DATA — D05

LINEARIZED WEATHER DATA — D06

LINEARIZED TEMPERATURE DATA — D07

LINEARIZED EVENT DATA — D08

GENERATE DATA FOR PREDICTION — S06

DATA FOR PREDICTION — D17

PREDICT DEMANDS — S07

PREDICTION RESULT DATA — D18

EP 2 506 193 A1

<table>
<tr><td colspan="2">**INTERNATIONAL SEARCH REPORT**</td><td colspan="2">International application No.<br>PCT/JP2010/070381</td></tr>
</table>

| A. CLASSIFICATION OF SUBJECT MATTER |
| --- |
| *G06Q10/00*(2006.01)i |

According to International Patent Classification (IPC) or to both national classification and IPC

| B. FIELDS SEARCHED |
| --- |
| Minimum documentation searched (classification system followed by classification symbols)<br>G06Q10/00 |

Documentation searched other than minimum documentation to the extent that such documents are included in the fields searched
| Jitsuyo Shinan Koho | 1922–1996 | Jitsuyo Shinan Toroku Koho | 1996–2010 |
| Kokai Jitsuyo Shinan Koho | 1971–2010 | Toroku Jitsuyo Shinan Koho | 1994–2010 |

Electronic data base consulted during the international search (name of data base and, where practicable, search terms used)

| C. DOCUMENTS CONSIDERED TO BE RELEVANT | | |
| --- | --- | --- |
| Category* | Citation of document, with indication, where appropriate, of the relevant passages | Relevant to claim No. |
| A | JP 2008-52455 A (Fujitsu Ten Ltd.),<br>06 March 2008 (06.03.2008),<br>entire text; all drawings<br>(Family: none) | 1-8 |
| A | JP 2001-155284 A (Rios Corp.),<br>08 June 2001 (08.06.2001),<br>entire text; all drawings<br>(Family: none) | 1-8 |
| A | JP 9-153098 A (Omron Corp.),<br>10 June 1997 (10.06.1997),<br>entire text; all drawings<br>(Family: none) | 1-8 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>13 December, 2010 (13.12.10) | Date of mailing of the international search report<br>21 December, 2010 (21.12.10) |
| --- | --- |
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2010/070381

C (Continuation).  DOCUMENTS CONSIDERED TO BE RELEVANT

| Category* | Citation of document, with indication, where appropriate, of the relevant passages | Relevant to claim No. |
|---|---|---|
| A | Tsutomu ONO et al., "Proposal and Evaluation of a Multivariate Linear Analysis Model in 'Jinryu' Transportation Methods", Journal of Japan Industrial Management Association, 15 August 2005 (15.08.2005), vol.56, no.3, pages 219 to 226 | 1-8 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001084240 A